# FASCICULE DE BREVET EUROPEEN

(11) **EP 3 816 152 B1**
(45) Date de publication et mention de la délivrance du brevet: **23.08.2023**
(21) Numéro de dépôt: 20203421.1
(22) Date de dépôt: 22.10.2020
(51) Int. Cl.: C07C 249/02, H01M 10/48, H01M 10/0525, C08B 37/08, C08L 5/08

(54) **MATÉRIAUX SPÉCIFIQUES UTILISABLES POUR LA DÉTECTION D'AU MOINS UN ÉLÉMENT ALCALIN**
SPEZIELLE MATERIALIEN, DIE ZUR DETEKTION MINDESTENS EINES ALKALINEN ELEMENTS VERWENDET WERDEN KÖNNEN
SPECIFIC MATERIALS USED FOR THE DETECTION OF AT LEAST ONE ALKALINE ELEMENT

(30) Priorité: 29.10.2019 FR 1912127
(43) Date de publication de la demande: 05.05.2021
(73) Titulaire: Commissariat à l'énergie atomique et aux énergies alternatives, 75015 Paris (FR)
(72) Inventeur: RACCURT, Olivier, 38054 GRENOBLE CEDEX 09 (FR); AUGER, Aurélien, 38054 GRENOBLE CEDEX 09 (FR)
(74) Mandataire: Brevalex

(56) Documents cités:
- WO-A1-01/36378
- WO-A1-03/018531
- US-A1- 2016 276 717
- CATHELL MATTHEW D ET AL: "Structurally Colored Thiol Chitosan Thin Films as a Platform for Aqueous Heavy Metal Ion Detection", BIOMACROMOLECULES, AMERICAN CHEMICAL SOCIETY, US, vol. 9, no. 1, 1 janvier 2008 (2008-01-01) , pages 289-295, XP009521418, ISSN: 1525-7797, DOI: 10.1021/BM700845Z [extrait le 2007-12-08]

## Description

### DOMAINE TECHNIQUE

La présente invention a trait à l'utilisation de matériaux spécifiques utilisables pour la détection voire la quantification d'un élément alcalin sous forme ionique et, plus spécifiquement du lithium cationique, par un mécanisme impliquant une complexation et un changement d'une grandeur optique donnée (par exemple, l'absorbance ou la fluorescence).

Cette invention peut trouver application dans tous les domaines nécessitant la détection de ce type d'élément tels que :
- le domaine de l'environnement, en particulier, le suivi de l'état de pollution d'un milieu donné par des éléments alcalins ;
- le domaine du recyclage de matériaux comprenant ce type d'élément, par exemple, les matériaux actifs à base d'élément alcalin entrant dans la constitution d'électrodes pour batteries métal alcalin-ion ;
- le domaine du suivi de l'état de fonctionnement voire de dégradation au cours du temps d'une batterie métal alcalin-ion, telle qu'une batterie lithium-ion.

Ces deux derniers domaines d'application sont particulièrement importants face au développement croissant ces dernières années des batteries métal alcalin-ion et, plus spécifiquement, lithium-ion.

En effet, les batteries de ce type sont particulièrement performantes comme source d'énergie autonome, en particulier, dans les équipements électroniques portables (tels que les téléphones mobiles, les ordinateurs portables, l'outillage) et peuvent servir également à fournir l'alimentation en énergie nécessaire aux nouvelles microapplications, telles que les cartes à puce, les capteurs ou autres systèmes électromécaniques ainsi que pour l'électromobilité.

Du point de vue de leur fonctionnement, ces batteries fonctionnent selon le principe d'insertion-désinsertion ionique dans les matériaux actifs des électrodes.

Plus spécifiquement, en prenant pour exemple, les batteries lithium-ion, lors du processus de décharge, l'électrode négative libère du lithium sous forme ionique Li⁺, qui migre à travers l'électrolyte conducteur ionique et vient s'incorporer dans le matériau actif de l'électrode positive pour former un matériau d'insertion. Le passage de chaque ion Li⁺ dans le circuit interne de l'accumulateur est exactement compensé par le passage d'un électron dans le circuit externe, générant ainsi un courant électrique.

En revanche, lors du processus de charge, les réactions se produisant au sein de de la batterie sont les réactions inverses de la décharge, à savoir que :
- l'électrode négative va incorporer du lithium dans le réseau du matériau la constituant, pour former un matériau d'insertion; et
- l'électrode positive va libérer du lithium, lequel va s'incorporer dans le matériau de l'électrode négative pour former un matériau d'insertion.

L'échange d'ions lithium est donc un paramètre primordial du fonctionnement de ces batteries. D'ailleurs, le vieillissement de ces batteries peut se traduire par une perte de capacité directement liée à une diminution du nombre d'ions lithium échangeables entre l'électrode négative et l'électrode positive. Cette diminution peut être liée à plusieurs phénomènes, tels que :
- la formation d'un dépôt irréversible de lithium métallique à la surface de l'électrode négative (au lieu de s'insérer dans le matériau actif de cette électrode), notamment lorsque la charge s'effectue à faible température et/ou à fort courant (ce phénomène pouvant être dénommé par l'expression anglaise « *lithium plating* ») ;
- après formation de la couche de passivation SEI (abréviation correspondant à l'expression anglaise « *Solid Electrolyte Interface* ») résultant d'une réduction de l'électrolyte à l'interface électrode négative/électrolyte, la poursuite de croissance de celle-ci au-delà des premiers cycles, notamment lorsque la SEI initiale subit un phénomène de craquellement par suite des contraintes mécaniques générées par les changements de volume de l'électrode négative ;
- la perte de contact entre les particules constitutives de l'électrode pouvant conduire à un isolement électrique.

Pour estimer l'état de fonctionnement ou le vieillissement des batteries, il peut s'avérer utile de pouvoir déterminer la concentration locale en ions lithium lors du fonctionnement de celles-ci. En effet, la mesure locale de la concentration en ions lithium au coeur de la batterie et l'évolution de la concentration au cours de la durée de vie de celle-ci pourrait permettre de mieux comprendre les phénomènes de dégradation, tels que ceux mentionnés ci-dessus et surtout de les suivre en temps réel. Cette mesure locale peut permettre également par un traitement approprié de l'information de surveiller précisément le fonctionnement de la batterie et ainsi améliorer la gestion de celle-ci en empêchant notamment de mettre la batterie dans une configuration accélérant prématurément sa dégradation. A titre d'exemple, la mesure locale de la concentration en ions lithium au sein de la batterie peut permettre de détecter les phénomènes de dégradation décrits précédemment et ainsi de limiter, par une rétroaction sur le système de management de la batterie (connu sous l'abréviation BMS) la sollicitation de la batterie dans une gamme de fonctionnement à la fois sécuritaire et non dégradante.

Le document Biomacromolecules 2008, 8, 289-295 décrit des matériaux à base de dérivés de chitosanes utilisables pour la détection d'ions métalliques (et plus spécifiquement, des ions métalliques lourds). En particulier, les dérivés de chitosane décrits sont :
- le composé A, pour lequel les groupes NH₂ sont substitués par des groupes -NH-CO-CH(NH₂)-CH₂OH ;
- le composé B, pour lequel les groupes NH₂ sont substitués par des groupes -NH-CO-CH₂-SH ;
- le composé C, pour lequel les groupes NH₂ sont substitués par des groupes -NH-C(=NH₂+)-(CH₂)₃-SH ;
- le composé D, pour lequel les groupes NH₂ sont substitués par des groupes -NH-CO-CH₃.

Il existe donc un véritable besoin pour la mise au point de nouveaux matériaux susceptibles de permettre la détection d'élément(s) alcalin(s) sous forme cationique et qui soient adaptés et stables pour une mise en oeuvre dans un milieu liquide, notamment un milieu liquide électrolytique, comme les électrolytes de batteries métal alcalin-ion.

### EXPOSÉ DE L'INVENTION

Ainsi, les inventeurs ont mis au point des matériaux utilisables pour la détection d'au moins un élément alcalin sous forme cationique choisi parmi les polymères ou les matériaux inorganiques, lesdits matériaux étant fonctionnalisés par au moins un groupe, dit groupe A, comprenant un ou plusieurs cycles aromatiques, le ou tout ou partie desdits cycles aromatiques comprenant au moins un substituant imine et le ou tout ou partie desdits cycles aromatiques comprenant au moins un atome porteur d'un doublet libre au sein du ou tout ou partie desdits cycles et/ou au moins un autre substituant différent d'un substituant imine et comprenant au moins un atome porteur d'un doublet libre.

Grâce à la présence d'au moins un substituant imine et d'au moins un atome porteur d'un doublet libre présents sur le ou les cycles aromatiques et/ou dans au moins un des autres substituants du ou desdits cycles, les matériaux sont aptes à capter par complexation un élément alcalin sous forme cationique et, suite à cette complexation, à subir un changement de couleur, qui peut être suivi par un changement de grandeur optique, telle que l'absorbance ou l'émission de fluorescence, ce qui constitue un indicateur de la présence dudit élément alcalin et peut permettre de le quantifier.

Par ailleurs, du fait que les matériaux sont choisis parmi les matériaux polymères et les matériaux inorganiques, les matériaux sont à même de pouvoir être incorporés dans de nombreux milieux, dans lesquels la détection d'un élément alcalin est nécessaire, et peuvent constituer des capteurs stables pour ladite détection.

On précise, par «fonctionnalisé», que l'on entend, au sens de l'invention, une fixation des groupes susmentionnés sur les matériaux par le biais de liaisons covalentes soit directement soit *via* des groupes espaceurs organiques (à savoir, des groupes organiques formant un pont entre lesdits matériaux et lesdits groupes A, ce qui signifie, en d'autres termes, que ces groupes espaceurs organiques sont liés par une liaison covalente aux matériaux et par une autre liaison covalente aux groupes A). A titre d'exemples de groupes espaceurs organiques, il peut être fait mention de groupes alkylènes.

Lorsqu'il s'agit de polymères, les matériaux peuvent être, en particulier, des matériaux appartenant à la famille des chitosanes, c'est-à-dire des polyosides résultant de la distribution aléatoire d'unités D-glucosamine liées en β-(1-4) et d'unités N-acétyl-D-glucosamine. Plus spécifiquement, tout ou partie des unités D-glucosamine peuvent avoir leurs fonctions amines transformées en fonctions imines, lesdites fonctions imines étant celles appartenant au(x) groupe(s) A, ce qui signifie en d'autres termes, que le ou les groupes A sont liés au matériau polymère au niveau des positions initialement occupées par ces fonctions amines, lesquelles sont converties en fonctions imines. Dans ce cas particulier, le polymère concerné constitue un reste de chitosane, du fait que les fonctions amines sont en tout ou partie converties en fonctions imines, lesquelles font désormais partie des groupes A.

Grâce à l'utilisation de polymères et, notamment de polymères appartenant à la famille des chitosanes, le matériau est un matériau entièrement organique et d'origine naturelle (les chitosanes étant des polyosides issus de la carapace des crustacés), ne présente aucune toxicité et reste biodégradable même après utilisation. Qui plus est, du fait de la capacité d'un polymère à pouvoir se déployer dans l'espace et de rendre disponibles les groupes A dans les trois directions de l'espace, les matériaux résultants sont à même de présenter une excellente capacité de détection d'un élément alcalin par captation de celui-ci par les substituants portés par les groupes A déployés dans l'espace.

Lorsqu'il s'agit de polymères, les matériaux peuvent être, en variante, des polymères appartenant à la famille des polytéréphtalates (comme un polytéréphtalate d'éthylène, connu sous l'abréviation PET), des polyoléfines (par exemple, un polyéthylène, un polypropylène), des polyalcools vinyliques, des polyamides, des polytétrafluoroéthylènes (connu sous l'abréviation PTFE), des polychlorures de vinyle (connu sous l'abréviation PVC), des polyfluorures de vinylidène (connu sous l'abréviation PVDF), ces polymères pouvant être ceux entrant dans la constitution des séparateurs de batteries. Dans ce cas dernier, les matériaux de l'invention peuvent directement faire partie intégrante des séparateurs de batterie, la luminescence ou l'absorbance liée aux groupes A pouvant être sondée à l'aide soit d'un guide d'onde, soit de fibres optiques placées sur le séparateur.

Lorsque les matériaux sont des matériaux inorganiques, il peut s'agir :
- d'un matériau en un ou plusieurs éléments métalloïdes, tels que du silicium ;
- d'un matériau en un oxyde d'un ou plusieurs éléments métalliques et/ou métalloïdes, tels que de la silice.

Plus spécifiquement, lorsque les matériaux sont des matériaux inorganiques, il peut s'agir -d'un matériau inorganique sous forme d'un support, tel qu'une plaque de verre, une plaque de quartz, un support en silicium ;
- d'un matériau inorganique intégré dans un capteur optique ; ou
- d'un matériau inorganique intégré dans une fibre optique.

Comme mentionné ci-dessus, les groupes A comprennent un ou plusieurs cycles aromatiques, le ou tout ou partie desdits cycles aromatiques comprenant au moins un substituant imine et le ou tout ou partie desdits cycles comprenant au moins un atome porteur d'un doublet libre au sein du ou tout ou partie desdits cycles et/ou au moins un autre substituant différent d'un substituant imine et comprenant au moins un atome porteur d'un doublet libre, ce qui couvrent les situations suivantes :
- les groupes A comprennent un seul cycle aromatique, ledit cycle aromatique comprenant au moins un substituant imine et, en outre, ledit cycle aromatique comprenant au moins un atome porteur d'un doublet libre en son sein (ce qui signifie, en d'autres termes, qu'il s'agit d'un cycle hétéroaromatique) et/ou au moins un autre substituant différent d'un substituant imine et comprenant au moins un atome porteur d'un doublet libre ;
- les groupes A comprennent plusieurs cycles aromatiques, tout ou partie desdits cycles comprenant au moins un substituant imine et tout ou partie desdits cycles comprenant au moins un atome porteur d'un doublet libre en leur sein (ce qui signifie, en d'autres termes, que le ou les cycles concernés sont des cycles hétéroaromatiques) et/ou au moins un autre substituant différent d'un substituant imine et comprenant au moins un atome porteur d'un doublet libre.

Par substituant imine, il s'entend un substituant répondant à la formule suivante : 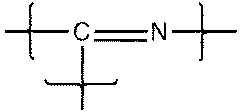 les deux accolades placées au niveau de l'atome de carbone indiquant que celui-ci est lié à deux autres atomes pour assurer sa tétravalence et l'accolade placée au niveau de l'atome d'azote indiquant que celui-ci est lié à un autre atome pour assurer sa trivalence. Plus spécifiquement, pour chaque substituant imine :
- l'atome de carbone peut être lié, d'une part, à un atome de carbone d'un cycle aromatique et, d'autre part, à un atome, tel qu'un hydrogène, un atome d'halogène ou un groupe, tel qu'un groupe alkyle ; et
- l'atome d'azote peut être lié au polymère ou au matériau inorganique, éventuellement, *via* un groupe espaceur organique.

Selon un premier mode de réalisation, le ou les groupes A comprennent, chacun, un ou plusieurs cycles aromatiques carbonés (c'est-à-dire des cycles dont l'ensemble des atomes constituant les cycles sont des atomes de carbone), le ou tout ou partie desdits cycles aromatiques carbonés comprenant au moins un substituant imine et le ou tout partie desdits cycles aromatiques carbonés comprenant au moins un atome porteur d'un doublet libre au niveau d'au moins un autre substituant différent d'un substituant imine.

Il est précisé que, par substituant, il s'entend un atome autre que l'hydrogène ou un groupe lié de manière covalente à un atome constitutif du cycle aromatique concerné.

Concernant l'autre substituant, pour tous modes de réalisation, il peut s'agir d'un substituant comprenant un atome d'oxygène, un atome de soufre et/ou un atome d'azote, de préférence, un substituant attracteur d'électrons et à effet mésomère donneur, tel qu'un substituant comprenant un atome d'oxygène, par exemple, un substituant hydroxyle.

En particulier, les groupes A peuvent consister en un seul cycle aromatique carboné (c'est-à-dire un cycle dont l'ensemble des atomes constituant le cycle sont des atomes de carbone), par exemple, à six chaînons (tel qu'un groupe phényle), étant entendu, dans ce cas, que ce cycle est porteur à la fois d'au moins un substituant imine et d'au moins un autre substituant différent d'un substituant imine et comprenant au moins un atome porteur d'un doublet libre (par exemple, un atome d'oxygène, un atome de soufre et/ou un atome d'azote), tel qu'un substituant attracteur d'électrons et à effet mésomère donneur, par exemple comprenant un atome d'oxygène, tel qu'un substituant hydroxyle.

Plus spécifiquement, les groupes A peuvent consister en un seul cycle aromatique carboné, tel qu'un groupe phényle, porteur d'un seul substituant imine et d'un seul autre substituant différent d'un substituant imine et comprenant au moins un atome porteur d'un doublet libre (par exemple, un atome d'oxygène, un atome de soufre et/ou un atome d'azote), tel qu'un substituant attracteur d'électrons et à effet mésomère donneur, par exemple comprenant un atome d'oxygène, tel qu'un substituant hydroxyle, ledit substituant imine et l'autre substituant étant en position *ortho* l'un de l'autre sur le cycle aromatique.

En outre, le cycle aromatique peut comprendre un ou plusieurs autres substituants, que ceux mentionnés ci-dessus, par exemple, des substituant s choisis parmi les atomes d'halogène, les groupes alkyles, les groupes alcoxy, les groupes esters.

A titre d'exemple de groupe(s) A, il peut être fait mention d'un groupe répondant à la formule (I) suivante : 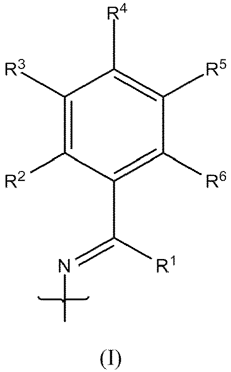 dans laquelle :
- R¹ représente un atome d'hydrogène ou un groupe alkyle, de préférence, un atome d'hydrogène ;
- R² représente un substituant comprenant un atome d'oxygène attracteur d'électrons et à effet mésomère donneur, tel qu'un substituant hydroxyle ; -R³ à R⁶ représentent, indépendamment l'un de l'autre, un atome d'hydrogène, un groupe alkyle, un groupe alcoxy, un groupe ester,
l'accolade indiquant l'endroit par lequel le groupe A est lié au matériau soit directement (ce qui signifie que l'atome d'azote est directement lié par covalence au matériau) soit *via* un groupe espaceur organique (ce qui signifie que le groupe espaceur organique forme un pont entre l'atome d'azote et le matériau).

Plus spécifiquement, l'un au moins des groupes R³ à R⁶ est un groupe ester et, encore plus spécifiquement, un seul des groupes R³ à R⁶ est un groupe ester, les autres groupes étant un atome d'hydrogène.

Un groupe A répondant à ces spécificités est un groupe de formule (II) suivante : 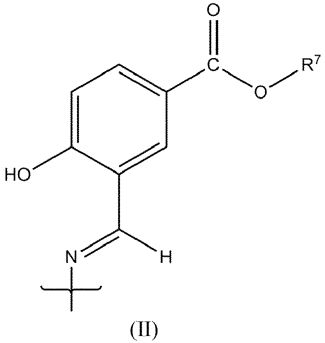 dans laquelle R⁷ représente un groupe alkyle et l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Selon un deuxième mode de réalisation, le ou les groupes A comprennent, chacun, un ou plusieurs cycles aromatiques, le ou tout ou partie desdits cycles aromatiques comprenant au moins un substituant imine et le ou tout partie desdits cycles comprenant, en leur sein, au moins un atome porteur d'un doublet libre, tel qu'un atome d'oxygène, un atome d'azote et/ou un atome de soufre (ce qui signifie, en d'autres termes, que le cycle aromatique ou tout ou partie desdits cycles aromatiques sont des cycles hétéroaromatiques).

Plus spécifiquement, le ou les groupes A peuvent consister en un seul cycle aromatique comprenant, en son sein, au moins un atome porteur d'un doublet libre, tel qu'un atome d'oxygène, un atome d'azote et/ou un atome de soufre (ce qui signifie, en d'autres termes, que le cycle aromatique est un cycle hétéroaromatique) et, encore plus spécifiquement, peuvent consister en un seul cycle aromatique comprenant, en son sein, deux atomes porteurs d'un doublet libre, tel qu'un atome d'oxygène, un atome d'azote et/ou un atome de soufre, étant entendu que le cycle aromatique comprend également au moins un substituant imine.

Avantageusement, le ou les groupes A peuvent consister en un cycle choisi parmi les thiazoles, les oxazoles, les imidazoles, les isoxazoles, les pyrazoles. Comme exemples de groupe(s) A consistant en un cycle thiazole, il peut être fait mention du groupe de formule (III) suivante : 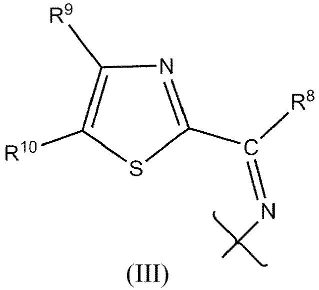 dans laquelle :
- R⁸ représente un atome d'hydrogène ou un groupe alkyle, de préférence, un atome d'hydrogène ;
- R⁹ et R¹⁰ représentent, indépendamment l'un de l'autre, un atome d'hydrogène, un groupe donneur d'électrons (ou électrodonneur), tel qu'un groupe alkyle ;
l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Un groupe A spécifique répondant à ces spécificités peut être un groupe répondant à l'une des formules (IV) à (VI) suivantes : 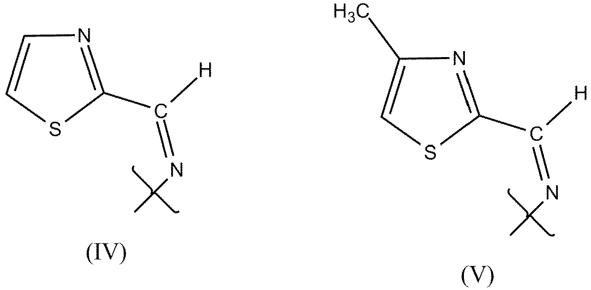 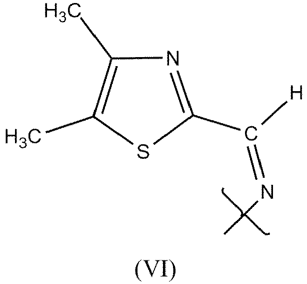 l'accolade, dans chacune de ces formules, indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Comme exemples de groupe(s) A consistant en un cycle oxazole, il peut être fait mention du groupe de formule (VII) suivante : 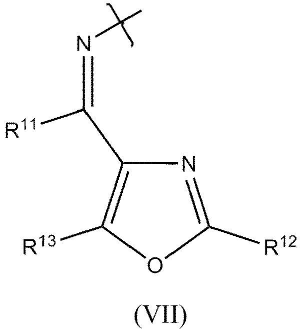 dans laquelle :
- R¹¹ représente un atome d'hydrogène ou un groupe alkyle, de préférence, un atome d'hydrogène ;
- R¹² et R¹³ représentent, indépendamment l'un de l'autre, un atome d'hydrogène, un groupe donneur d'électrons (ou électrodonneur), tel qu'un groupe alkyle ;
l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Un groupe A spécifique répondant à ces spécificités peut être un groupe répondant la formule (VIII) suivante : 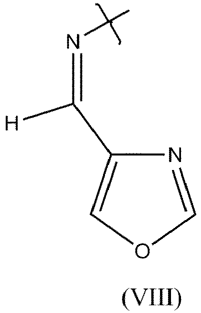 l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Comme exemples de groupe(s) A consistant en un cycle imidazole, il peut être fait mention du groupe de formule (IX) suivante : 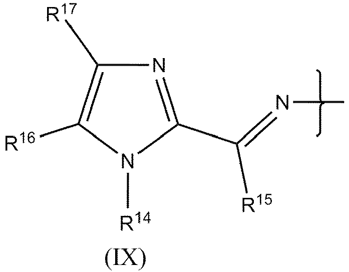 dans laquelle :
- R¹⁴ et R¹⁵ représentent, indépendamment l'un de l'autre, un atome d'hydrogène ou un groupe alkyle, de préférence, un atome d'hydrogène ;
- R¹⁶ et R¹⁷ représentent, indépendamment l'un de l'autre, un atome d'hydrogène, un groupe donneur d'électrons (ou électrodonneur), tel qu'un groupe alkyle ;
l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Un groupe A spécifique répondant à ces spécificités peut être un groupe répondant la formule (X) suivante : 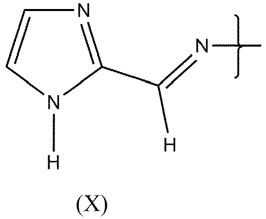 l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Comme exemples de groupe(s) A consistant en un cycle isoxazole, il peut être fait mention du groupe de formule (XI) suivante : 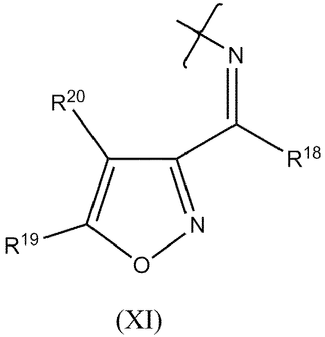 dans laquelle :
- R¹⁸ représente un atome d'hydrogène ou un groupe alkyle, de préférence, un atome d'hydrogène ;
- R¹⁹ et R²⁰ représentent, indépendamment l'un de l'autre, un atome d'hydrogène, un groupe donneur d'électrons (ou électrodonneur), tel qu'un groupe alkyle ;
l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Un groupe A spécifique répondant à ces spécificités peut être un groupe répondant la formule (XII) suivante : 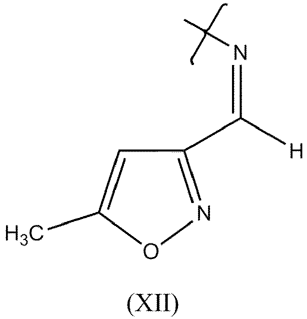 l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Comme exemples de groupe(s) A consistant en un cycle pyrazole, il peut être fait mention du groupe de formule (XIII) suivante : 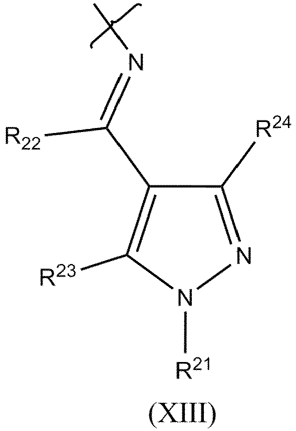 dans laquelle :
- R²¹ et R²² représentent, indépendamment l'un de l'autre, un atome d'hydrogène ou un groupe alkyle, de préférence, un atome d'hydrogène ;
- R²³ et R²⁴ représentent, indépendamment l'un de l'autre, un atome d'hydrogène, un groupe donneur d'électrons (ou électrodonneur), tel qu'un groupe alkyle ;
l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Un groupe A spécifique répondant à ces spécificités peut être un groupe répondant la formule (XIV) suivante : 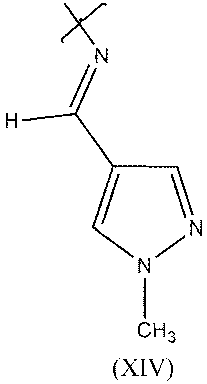 l'accolade indiquant l'endroit par lequel le groupe A est lié au matériau soit directement (ce qui signifie que l'atome d'azote est directement par covalence au matériau) soit *via* un groupe espaceur organique (ce qui signifie que le groupe espaceur organique forme un pont entre l'atome d'azote et le matériau).

Comme mentionné plus haut, ces matériaux peuvent être utilisés pour la détection d'un élément alcalin sous forme cationique, tels que des ions lithium.

Aussi, l'invention a trait également à :
- l'utilisation pour la détection d'au moins un élément alcalin sous forme cationique d'un matériau conforme à l'invention tel que défini ci-dessus ;
- un procédé de détection dans un milieu d'au moins un élément alcalin sous forme cationique mettant en oeuvre ce matériau.

Plus spécifiquement, le procédé de détection dans un milieu d'au moins un élément alcalin sous forme cationique (par exemple, des ions lithium) conforme à l'invention comprend les étapes suivantes :
a) après contact du matériau avec le milieu, une étape de comparaison visuelle ou de comparaison par mesure d'une grandeur optique donnée entre le matériau mis en contact avec le milieu et le matériau non mis en contact avec le ou les éléments alcalins, dont on veut détecter la présence ;
b) à partir des résultats de l'étape a), une étape de déduction de la présence ou de l'absence du ou des éléments alcalins.

Lorsque le matériau n'est pas directement intégré dans le milieu, dans lequel on veut déterminer la présence d'élément(s) alcalin(s), le procédé de détection comprend, en premier lieu, une étape de mise en contact du milieu, dans lequel on veut détecter la présence d'élément(s) alcalin(s) sous forme cationique, avec un matériau conforme à l'invention.

Selon un premier mode de réalisation, l'étape de mise en contact peut consister à mettre en contact le matériau avec le milieu, ledit matériau étant apte à se solubiliser dans ledit milieu, cette mise en contact pouvant être accompagnée de conditions spécifiques concernant le pH du milieu (ce qui peut nécessiter l'ajout au milieu d'une solution tampon pour fixer le pH du milieu à une valeur donnée) notamment pour induire la complexation du matériau avec le ou les éléments alcalins présents, le cas échéant, dans le milieu.

Selon un deuxième mode de réalisation, l'étape de mise en contact peut consister à mettre en contact le matériau avec le milieu, lequel matériau est insoluble avec le milieu, ce matériau pouvant se présenter sous différentes formes, telles que :
- un matériau inorganique sous forme d'un support (par exemple, un support plan) fonctionnalisé par des groupes A tels que définis ci-dessus, tel qu'une plaque de verre, une plaque de quartz ou tout autre support (par exemple, un support en silicium) ;
- un matériau inorganique intégré dans un capteur optique, par exemple, un capteur plan ; -un matériau inorganique intégré dans une fibre optique, ledit matériau étant fonctionnalisé par des groupes A tels que définis ci-dessus ;
- un matériau organique, par exemple, du type polymère, fonctionnalisé par des groupes A tels que définis ci-dessus, ce matériau pouvant être par exemple, un matériau polymère apte à entrer dans la constitution d'un séparateur de batterie, la luminescence ou l'absorbance liée aux groupes A pouvant être sondée à l'aide soit d'un guide d'onde, soit de fibres optiques placées sur le séparateur.

L'étape de mise en contact est adaptée pour les procédés dans lesquels il s'agit de détecter ponctuellement des éléments alcalins, par exemple, dans un milieu issu de procédés de recyclage, par exemple, des batteries ou un milieu issu d'un environnement potentiellement pollué.

En variante, le matériau peut être directement intégré, de manière permanente, dans l'environnement du milieu, que l'on souhaite analyser, ce qui est le cas lorsque la détection consiste en un suivi de l'évolution de la quantité d'éléments alcalins dans un milieu donné. Ce cas de figure peut se présenter notamment lorsque le procédé de détection consiste à déterminer localement la concentration en élément(s) alcalin(s) voire suivre l'évolution de cette concentration au sein d'un milieu électrolytique d'une batterie métal alcalin-ion, en vue d'avoir un indice sur son état de santé, ce type de détection pouvant être qualifié de détection *in situ.*

Après contact du matériau avec le milieu, dans lequel on veut détecter la présence d'élément(s) alcalin(s), il peut être procédé à une étape de comparaison visuelle entre le matériau mis en contact avec le milieu et le matériau non mis en contact avec le ou les éléments alcalins, que l'on veut détecter, et des résultats de cette comparaison, il peut en être déduit la présence d'élément(s) alcalin(s), étant entendu que cette comparaison visuelle n'a de pertinence que pour le cas où le changement de couleur s'opère dans le spectre visible. En effet, en cas de comparaison visuelle, s'il est constaté un changement de couleur entre le matériau non mis en contact avec le ou les éléments alcalins, dont on souhaite détecter la présence et le matériau mis en contact avec le milieu, ce changement de couleur peut être induit par une réaction de complexation avec le ou les éléments alcalins, attestant ainsi de leur présence dans le milieu. En cas d'absence de changement de couleur, ceci peut être relié à l'absence d'élément(s) alcalin(s) dans le milieu. Pour que cette étape de comparaison visuelle soit fiable, des essais préalables peuvent être menés pour établir le changement de couleur, qui se produit en présence d'élément(s) alcalin(s), dont on veut déterminer la présence ou l'absence dans un milieu donné. Pour ce faire, ces essais préalables peuvent consister à mettre en contact le matériau avec un milieu contenant des éléments alcalins, pour observer le changement de couleur dudit matériau, ce changement de couleur étant ensuite utilisé comme base de comparaison pour l'étape de comparaison visuelle susmentionnée.

En variante de l'étape de comparaison visuelle, il peut être procédé à une étape de mesure optique et, plus spécifiquement, une étape de comparaison par mesure d'une grandeur optique donnée entre le matériau mis en contact avec le milieu et le matériau non mis en contact avec le ou les éléments alcalins, dont on veut détecter la présence, cette grandeur optique pouvant être l'absorbance ou une émission de fluorescence, cette étape de mesure optique étant particulièrement appropriée lorsque les phénomènes optiques se produisent dans le spectre non visible (tel que le spectre UV ou le spectre infrarouge).

Concernant l'absorbance, celle-ci consiste à mesurer, grâce à un spectrophotomètre, la valeur d'absorbance ou de densité optique du matériau mis en contact avec le milieu et de comparer la valeur d'absorbance obtenue avec celle du même matériau non mis en contact avec le ou les éléments alcalins, que l'on veut détecter, une différence entre ces deux valeurs indiquant que le milieu à analyser comprend bien des éléments alcalins. Il est à noter qu'avec cette technique, il est également possible de quantifier la concentration en éléments alcalins présents dans le milieu à analyser en disposant d'une courbe d'étalonnage permettant de relier l'absorbance du matériau en fonction de la concentration en éléments alcalins et de remonter ainsi à la concentration en élément(s) alcalin(s) dans le milieu à analyser.

Concernant l'émission de fluorescence, celle-ci consiste à mesurer, après absorption d'une énergie lumineuse (dite lumière d'excitation) par le matériau mis en contact avec le milieu, la lumière de fluorescence restituée par le matériau (dite lumière d'émission) sous forme d'un spectre d'émission et comparer ce spectre d'émission avec celui du même matériau non mis en contact avec le ou les éléments alcalins, que l'on veut détecter, une différence entre ces deux spectres d'émission indiquant que le milieu à analyser comprend bien des éléments alcalins. Au même titre que pour l'absorbance, il est possible de quantifier la concentration en éléments alcalins présents dans le milieu à analyser en disposant d'une courbe d'étalonnage permettant de relier l'émission lumineuse du matériau en fonction de la concentration en éléments alcalins et de remonter ainsi à la concentration en éléments alcalins dans le milieu à analyser. En variante, il peut être à la mesure du temps de vie de la fluorescence pour effectuer la détection.

Cette comparaison par mesure de grandeur optique est particulièrement appropriée pour les cas de figure suivants :
- le cas de figure exposé dans le premier mode de réalisation ci-dessus, dans lequel le matériau est solubilisé dans le milieu à analyser ;
- le cas de figure exposé dans le deuxième mode de réalisation ci-dessus, dans lequel le matériau se présente sous forme d'un support fonctionnalisé par les groupes A, tel qu'une plaque, au moyen de laquelle il est possible, en partant de la réponse optique de celle-ci et en connaissant la quantité de groupes A fonctionnalisant sa surface, de remonter à une détection et quantification des éléments alcalins présents dans le milieu ; -le cas de figure exposé au deuxième mode de réalisation ci-dessus, dans lequel le matériau se présente sous forme d'une fibre optique, la mesure de la grandeur optique pouvant se faire *via* une sonde optique. Plus spécifiquement, lorsque la grandeur optique est une émission de fluorescence et que la fibre optique est une fibre aller-retour, il est envisageable d'envoyer la lumière d'excitation dans la fibre et de récolter la lumière d'émission émise par les groupes A et de remonter à la détection et la quantification des éléments alcalins selon les mêmes principes que ceux exposés ci-dessus. Ce cas de figure est envisageable pour la détection d'éléments alcalins dans des électrolytes liquides contenus dans une batterie, la fibre optique pouvant être placée à différents endroits de la batterie (par exemple, entre les électrodes au contact d'un séparateur, dans le séparateur ou si la fibre est assez fine, dans l'une des électrodes).

Cette comparaison par mesure de grandeur optique est également appropriée pour le cas de figure, où le matériau est directement intégré, de manière permanente, dans l'environnement du milieu, que l'on souhaite analyser, par exemple, sous forme d'un capteur, par exemple, dans une batterie lithium-ion, ce capteur pouvant être un capteur plan suffisamment petit et disposé sur un substrat inerte vis-à-vis de l'environnement de la batterie et connecté à une sonde optique, l'ensemble pouvant être placé dans l'enroulement pour les batteries d'architecture bobinée ou dans l'empilement pour les batteries d'architecture planaire. Le matériau peut être également directement intégré dans le séparateur ou les séparateurs de la batterie, les groupes A étant liés au matériau polymère constitutif du séparateur ou peut être intégré sous forme d'une couche à la surface du ou des séparateurs.

Par ailleurs, il est également envisageable de mettre en oeuvre pour l'étape de comparaison d'autres techniques optiques. Lorsque le matériau destiné à être fonctionnalisé est intégré dans une fibre optique, il est possible de supprimer ou modifier localement à la surface de la fibre sa gaine optique ce qui va créer des zones permettant de générer des ondes évanescentes par changement d'indice. Si sur ces zones, il est effectué la fonctionnalisation pour la détection du ou des éléments alcalins, il sera possible de la même façon de détecter et quantifier ce ou ces éléments alcalins. En effet, par cette technique, il est possible d'aller sonder localement la luminescence. Il est envisageable de coupler ce genre de mise en oeuvre avec une détection par réseau de Bragg qui donne d'autre informations comme la température et la contrainte locale sachant que les deux techniques (réseau de Bragg et luminescence) ne se sondent pas avec les mêmes longueurs d'onde et sont donc optiquement compatibles.

La méthode décrite précédemment peut également être mise en oeuvre sous forme de substrat plan en utilisant des couches optiques formant un guide d'onde et faire la mesure de la même façon.

Enfin, l'invention a trait également à une batterie métal alcalin-ion, telle qu'une batterie lithium-ion, comprenant une cellule électrochimique comprenant une électrode positive, une électrode négative et un électrolyte disposé entre ladite électrode positive et ladite électrode négative, l'électrolyte étant un électrolyte liquide comprenant des ions alcalins, caractérisé en que la cellule comprend, en outre, un matériau conforme à l'invention tel que défini ci-dessus.

Par électrode positive, il est entendu, dans ce qui précède et ce qui suit, l'électrode qui fait office de cathode, quand la batterie débite du courant (c'est-à-dire lorsqu'elle est en processus de décharge) et qui fait office d'anode lorsque la batterie est en processus de charge.

Par électrode négative, il est entendu, dans ce qui précède et ce qui suit, l'électrode qui fait office d'anode, quand la batterie débite du courant (c'est-à-dire lorsqu'elle est en processus de décharge) et qui fait office de cathode, lorsque la batterie est en processus de charge.

L'électrolyte est avantageusement confiné dans un séparateur disposé entre l'électrode positive et l'électrode négative, qui permet, en outre, outre une séparation physique entre celles-ci.

Ce séparateur est, avantageusement, en un matériau poreux apte à accueillir dans sa porosité l'électrolyte liquide.

Ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC), un polyfluorure de vinylidène (connu sous l'abréviation PVDF). Le séparateur peut présenter une épaisseur allant de 5 à 300 µm. Le séparateur peut également être constitué de plusieurs matériaux disposés en sandwich (PE/PP/PE par exemple) disposant, éventuellement, d'un dépôt en surface de type inorganique afin de renforcer sa résistance mécanique. En particulier des dépôts d'alumine, de zircone ou d'autres oxydes peuvent être utilisés pour prévenir les courts-circuits en cas de croissance dendritique de lithium métallique (ce qui correspond à un processus de dégradation par Lithium platting en anglais).

Plus spécifiquement, l'électrolyte liquide comprend au moins un solvant organique et au moins un sel conducteur d'ions comprenant des ions alcalins, tel qu'un sel de lithium lorsque la batterie est une batterie lithium-ion.

A titre d'exemples de sel de lithium, on peut citer LiClO₄, LiAsF₆, LiPF₆, LiBF₄, LiRfSO₃, LiCH₃SO₃, LiN(RfSO₂)₂, Rf étant choisi parmi F ou un groupe perfluoroalkyle comportant de 1 à 8 atomes de carbone, du trifluorométhanesulfonylimidure de lithium (connu sous l'abréviation LiTFSI), du bis(oxalato)borate de lithium (connu sous l'abréviation LiBOB), du bis(perfluoréthylsulfonyl)imidure de lithium (également connu sous l'abréviation LiBETI), du fluoroalkylphosphate de lithium (connu sous l'abréviation LiFAP).

A titre d'exemples de solvants organiques susceptibles d'entrer dans la constitution de l'électrolyte susmentionné, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate de diméthyle ou le carbonate de diéthyle (symbolisé par l'abréviation DEC), le carbonate de diméthyle (symbolisé par l'abréviation DMC), le carbonate d'éthylméthyle (symbolisé par l'abréviation EMC).

L'électrode négative comprend, classiquement, comme matériau actif d'électrode, un matériau apte à insérer, de manière réversible, du lithium.

L'électrode positive comprend, classiquement, un matériau actif, c'est-à-dire un matériau apte à intervenir dans les réactions d'insertion et de désinsertion se produisant lors du fonctionnement de la batterie.

Le matériau conforme à l'invention peut être inséré à différents endroits de la cellule, dès lors que ces endroits sont en contact avec les éléments alcalins présents dans l'électrolyte, par exemple, au niveau du séparateur et/ou de l'une au moins des électrodes.

Enfin, les inventeurs ont mis au point un procédé innovant pour fabriquer les matériaux conformes à l'invention, ce procédé impliquant la formation du substituant imine en présence d'au moins un fluide supercritique par réaction de condensation entre une fonction amine et une fonction carbonyle.

Plus spécifiquement, selon un premier mode de réalisation, le procédé de fabrication d'un matériau conforme à l'invention comprend une étape de réaction de condensation, en présence d'au moins un fluide supercritique, entre un précurseur des groupes A comprenant au moins une fonction carbonyle et le matériau destiné à être fonctionnalisé comprenant au moins une fonction amine, de préférence, amine primaire, moyennant quoi un matériau conforme à l'invention est obtenu.

Grâce à la mise en oeuvre de la réaction de condensation en présence d'au moins un fluide supercritique, les auteurs de l'invention ont pu mettre en évidence une durée de réaction plus rapide qu'en milieu solvant classique (par exemple, de 30 minutes à 3 heures avec le fluide supercritique contre plusieurs jours, voire 1 semaine avec le milieu en solvant classique).

Par fluide supercritique, il s'entend un fluide porté à une pression et une température au-delà de son point critique, correspondant au couple de température et de pression (respectivement Tc et Pc), pour lequel la phase liquide et la phase gazeuse présentent la même densité et au-delà duquel le fluide se situe dans son domaine supercritique. Dans des conditions supercritiques, le fluide présente un pouvoir de dissolution très accrue par rapport au même fluide dans des conditions supercritiques et facilite de ce fait la solubilisation des réactifs facilitant ainsi la réactivité entre eux.

De préférence, que ce soit pour ce mode de réalisation ou d'autres modes de réalisation, l'étape de réaction est mise en oeuvre en présence d'un seul fluide supercritique, qui est, de préférence, du CO₂ supercritique, notamment en raison de sa température critique faible (31°C), ce qui permet de mettre en oeuvre la réaction à basse température sans risque de dégradation des réactifs mis en présence. Plus précisément, le CO₂ supercritique s'obtient en chauffant du dioxyde de carbone au-delà de sa température critique (31°C) et en le comprimant au-dessus de sa pression critique (73 bars). Qui plus est, le CO₂ supercritique est non inflammable, non toxique, relativement bon marché et ne nécessite pas de retraitement à l'issue du procédé, comparativement à des procédés impliquant l'utilisation de solvant organique.

Lorsque le fluide supercritique utilisé est du CO₂ supercritique, les conditions de température et de pression pouvant être, en particulier, de 105°C et 260 bars.

Le précurseur des groupes A répond à la même définition que les groupes A définis ci-dessus, si ce n'est que le ou les fonctions imines sont remplacées par une ou des fonctions carbonyles. Autrement dit, le précurseur des groupes A peut être défini comme étant un composé comprenant un ou plusieurs cycles aromatiques, le ou tout ou partie desdits cycles aromatiques comprenant au moins un substituant carbonyle et le ou tout ou partie desdits cycles comprenant au moins un atome porteur d'un doublet libre au sein du ou tout ou partie desdits cycles et/ou au moins un autre substituant différent d'un substituant carbonyle et comprenant au moins un atome porteur d'un doublet libre.

Hormis le substituant carbonyle remplaçant le substituant imine, les différentes déclinaisons exposées pour définir les groupes A sont également valables pour définir le précurseur.

A titre d'exemples :
- lorsque le ou les groupes A répondent à la formule (II) avec R⁷ correspondant à un groupe éthyle, le précurseur correspond au 3-formyl-4-hydroxybenzoate d'éthyle (présentant un point de fusion allant de 67 à 73°C) ;
- lorsque le ou les groupes A répondent à la formule (IV), le précurseur correspond au 2-thiazolecarboxaldéhyde ;
- lorsque le ou les groupes A répondent à la formule (V), le précurseur correspond au 4-méthyl-2-thiazolecarboxaldéhyde ;
- lorsque le ou les groupes A répondant à la formule (VI), le précurseur correspond au 4,5-diméthylthiazole-2-carboxaldéhyde ;
- lorsque le ou les groupes A répondent à la formule (VIII), le précurseur correspond au 4-oxazolecarboxaldéhyde ;
- lorsque le ou les groupes A répondent à la formule (X), le précurseur correspond au 2-imidazolecarboxaldéhyde ;
- lorsque le ou les groupes A répondent à la formule (XI), le précurseur correspond au 5-méthylisoxazole-3-carboxaldéhyde ;
- lorsque le ou les groupes A répondent à la formule (XIV), le précurseur correspond au 1-méthyl-1H-pyrazole-4-carboxaldéhyde.

Avantageusement, le ou les précurseurs sont solubles dans le ou les fluides supercritiques utilisés et présentent, de préférence, un caractère lipophile.

Avantageusement, que ce soit pour ce mode de réalisation ou d'autres modes de réalisation, le ou les précurseurs présentent une température de fusion inférieure à la température de mise en oeuvre de l'étape de réaction de condensation en présence d'au moins un fluide supercritique et, plus spécifiquement, la température de fusion du ou des précurseurs peut être inférieure à 120°C.

Par ailleurs, le ou les précurseurs présentent avantageusement un caractère chromophore.

Le matériau comprenant au moins une fonction amine peut être un polymère porteur de groupes pendants amines, tel qu'un polymère de la famille des chitosanes.

Selon un second mode de réalisation, le procédé de fabrication d'un matériau conforme à l'invention comprend les étapes suivantes :
- une étape de réaction de condensation, en présence d'au moins un fluide supercritique, entre un précurseur des groupes A comprenant au moins un substituant carbonyle et un composé comprenant au moins une fonction amine, de préférence amine primaire (qui a pour particularité d'être riche en électrons), et au moins une fonction apte à réagir, de manière covalente, avec une fonction appartenant au matériau destiné à être fonctionnalisé, ledit composé résultant comprenant un groupe A comprenant au moins une fonction imine liée à un reste du composé comprenant initialement au moins une fonction amine, ledit reste comprenant au moins une fonction apte à réagir, de manière covalente, avec une fonction appartenant au matériau destiné à être fonctionnalisé ;
- une étape de réaction du composé résultant de l'étape de réaction de condensation avec le matériau destiné à être fonctionnalisé, moyennant quoi un matériau conforme à l'invention est obtenu.

Le précurseur des groupes A peut être défini tel que celui défini dans le cadre du premier mode de réalisation.

Le composé comprenant au moins une fonction amine et au moins une fonction apte à réagir, de manière covalente, avec une fonction appartenant au matériau destiné à être fonctionnalisé peut être en particulièrement un composé silane comprenant au moins un groupe porteur d'au moins une fonction -NH₂ et au moins une fonction hydrolysable, telle qu'une fonction alcoxy.

A titre d'exemple, un tel composé peut être le composé 3-aminopropyltriéthoxysilane (connu également sous l'abréviation APTES) de formule suivante :

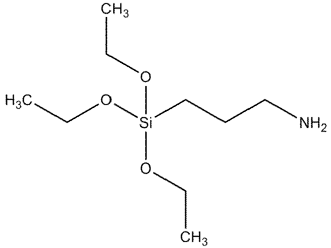

Si l'on part du précurseur de groupe A (3-formyl-4-hydroxybenzoate d'éthyle), la réaction avec l'APTES conduit au composé de formule suivante :

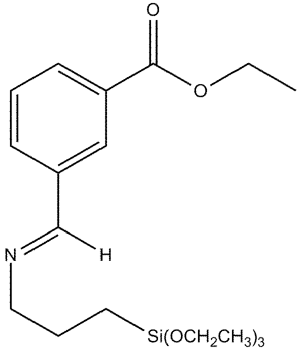

Avec des composés du type silane comportant des fonctions hydrolysables, telles que des alcoxy, le matériau destiné à être fonctionnalisé et particulièrement adapté peut être un matériau inorganique du type silice, la réaction entre la silice et le composé silane pouvant consister en une réaction d'hydrolyse-condensation, permettant le greffage covalent dudit composé sur la silice.

D'autres caractéristiques et avantages de l'invention apparaîtront du complément de description qui suit qui se rapporte à deux exemples de réalisation.

Bien entendu, ce complément de description n'est donné qu'à titre d'illustration de l'invention et n'en constitue en aucun cas une limitation.

### BRÈVE DESCRIPTION DES DESSINS

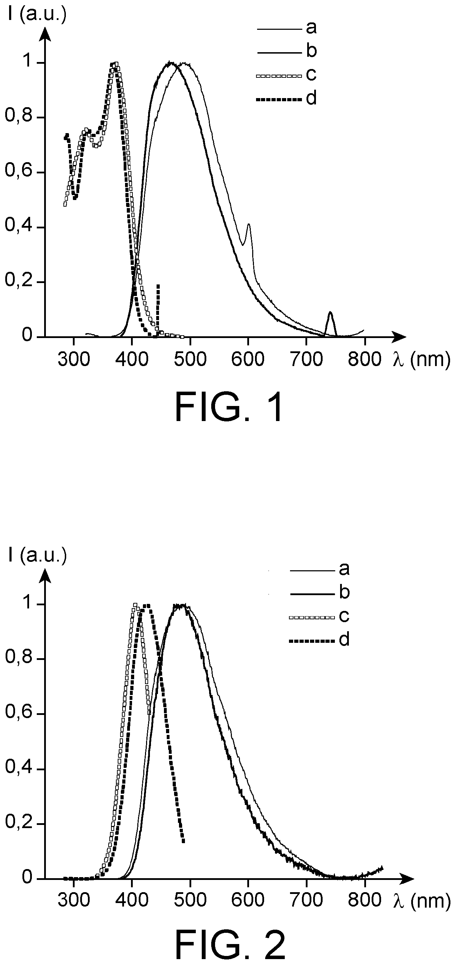

La figure 1 est un graphique illustrant l'évolution de l'intensité I (en unités arbitraires u.a) du spectre d'absorbance en fonction de la longueur d'onde λ (en nm) pour la solution S1 (courbe a pour l'émission à 300 nm et courbe b pour l'émission à 371 nm) et du spectre de fluorescence pour la solution S1 (courbe c pour l'excitation à 500 nm et courbe d pour l'excitation à 450 nm).
La figure 2 est un graphique illustrant l'évolution de l'intensité I (en unités arbitraires u.a) du spectre d'absorbance en fonction de la longueur d'onde λ (en nm) pour la solution S2 (courbe a pour l'émission à 350 nm et courbe b pour l'émission à 371 nm) et du spectre de fluorescence pour la solution S2 (courbe c pour l'excitation à 500 nm et courbe d pour l'excitation à 450 nm).

### EXPOSÉ DÉTAILLÉ DE MODES DE RÉALISATION PARTICULIERS

### EXEMPLE 1

Cet exemple illustre la préparation d'un matériau conforme à l'invention répondant à la formule simplifiée suivante :

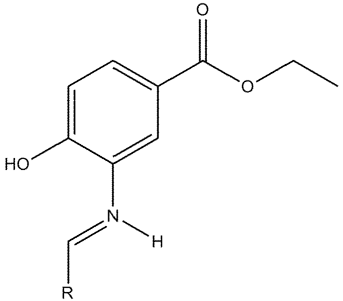

R représentant un reste de chitosane.

Pour des raisons de simplification, un seul groupe 3-imino-4-hydroxybenzoate d'éthyle a été représenté mais il s'entend que tout ou partie des groupes -NH₂ initialement présents sur le chitosane sont remplacés par ce groupe.

Le schéma réactionnel de préparation de ce matériau est le suivant :

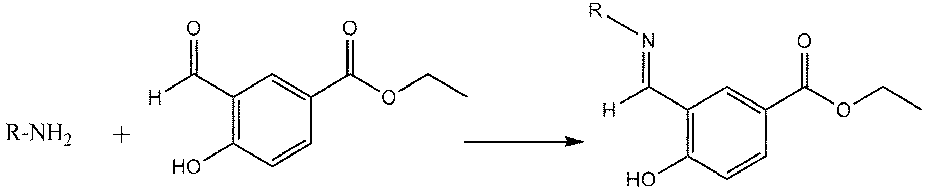

R-NH₂ représentant un chitosane (un seul groupe -NH₂ étant représenté pour des questions de simplification).

Cette réaction consiste ainsi en une réaction de condensation entre des groupes amines primaires (riches en électrons) portées par la chitosane et une molécule aromatique chromophore : le 3-formyl-4-hydroxybenzoate d'éthyle présentant un faible point de fusion (67-73°C) et un caractère lipophile grâce la présente du groupe benzoate d'éthyle.

La réaction de condensation est réalisée dans des conditions supercritiques et, plus spécifiquement, les réactifs susmentionnés sont mis en présence de CO₂ supercritique sous une pression de 260 bars, une température de 105°C et une durée de 3 heures.

Le matériau résultant de cette réaction et conforme à l'invention est un matériau de couleur jaune (alors que les réactifs de départ sont incolores), ce qui atteste d'un changement du système conjugué Π *via* la formation de la fonction imine.

### EXEMPLE 2

Cet exemple vise à démontrer la fiabilité des matériaux conformes à l'invention, et plus spécifiquement, le matériau préparé selon l'exemple 1 ci-dessus pour la détection d'ions lithium.

Pour ce faire, dans un premier temps, les solutions suivantes ont été préparées :
- une solution dite « S0 » constitué d'un électrolyte comprenant un mélange de carbonate d'éthylène (EC) et de carbonate de diéthylène (DEC) (50/50) et un sel de lithium (LiPF₆) à 1M ;
- une solution dite « S1 » constitué d'un mélange de carbonate d'éthylène (EC) et de carbonate de diéthylène (DEC) (50/50), dans lequel ont été ajoutés 2,74% massique du matériau de l'exemple 1 ;
- une solution dite « S2 » d'un électrolyte comprenant un mélange de carbonate d'éthylène (EC) et de carbonate de diéthylène (DEC) (50/50) et un sel de lithium (LiPF₆) à 1M, dans lequel ont été ajoutés 2,74% massique du matériau de l'exemple 1.

Ces solutions ont toutes été préparées en boîte à gants sous azote et sans humidité, afin de se placer en milieu anhydre comme cela est le cas dans un environnement de batterie lithium-ion, dans lequel le type d'électrolyte mentionné ci-dessus est communément utilisé.

Dans un deuxième temps, les solutions ainsi préparées sont soumises à une observation visuelle. Il ressort de cette observation que la solution S2 a subi un virement de couleur du jaune au rose, ce qui est le signe d'une réaction, qui pourrait être liée à la présence du lithium. La solution S1, quant à elle, conserve sa couleur jaune, tandis que la solution S0 reste transparente.

Enfin, dans un troisième temps, les solutions S1 et S2 sont soumises à des mesures d'absorbance et de fluorescence, afin de qualifier la capacité du matériau à détecter la présence des ions lithium.

Les résultats sont reportés sur les figures 1 et 2 jointes en annexe :
- la figure 1 illustre l'évolution de l'intensité I (en unités arbitraires u.a) du spectre d'absorbance en fonction de la longueur d'onde λ (en nm) pour la solution S1 (courbe a pour l'émission à 300 nm et courbe b pour l'émission à 371 nm) et du spectre de fluorescence pour la solution S1 (courbe c pour l'excitation à 500 nm et courbe d pour l'excitation à 450 nm) ;
- la figure 2 illustre l'évolution de l'intensité I (en unités arbitraires u.a) du spectre d'absorbance en fonction de la longueur d'onde λ (en nm) pour la solution S2 (courbe a pour l'émission à 350 nm et courbe b pour l'émission à 371 nm) et du spectre de fluorescence pour la solution S2 (courbe c pour l'excitation à 450 nm et courbe d pour l'excitation à 500 nm).

Il ressort clairement de ces figures une modification du spectre d'absorbance et du spectre de fluorescence pour la solution S2 par rapport à la solution S1, qui ne contient pas d'ions lithium. Ceci atteste de la capacité du matériau conforme à l'invention à complexer les ions lithium et à modifier concomitamment sa fluorescence, ce qui démontre également sa capacité à tracer la présence d'ions lithium.

## Revendications

1. Matériau utilisable pour la détection d'au moins un élément alcalin sous forme cationique choisi parmi les polymères ou les matériaux inorganiques, ledit matériau étant fonctionnalisé par au moins un groupe, dit groupe A, comprenant un ou plusieurs cycles aromatiques, le ou tout ou partie desdits cycles aromatiques comprenant au moins un substituant imine et le ou tout ou partie desdits cycles aromatiques comprenant au moins un atome porteur d'un doublet libre au sein du ou tout ou partie desdits cycles et/ou au moins un autre substituant différent d'un substituant imine et comprenant au moins un atome porteur d'un doublet libre.

2. Matériau selon la revendication 1, dans lequel le ou les groupes A comprennent chacun un ou plusieurs cycles aromatiques carbonés, le ou tout ou partie desdits cycles aromatiques carbonés comprenant au moins un substituant imine et le ou tout partie desdits cycles aromatiques carbonés comprenant au moins un atome porteur d'un doublet libre au niveau d'au moins un autre substituant différent d'un substituant imine.

3. Matériau selon la revendication 1 ou 2, dans lequel l'autre substituant est un substituant comprenant un atome d'oxygène, un atome de soufre et/ou un atome d'azote.

4. Matériau selon l'une quelconque des revendications précédentes, dans lequel l'autre substituant est un substituant attracteur d'électrons et à effet mésomère donneur.

5. Matériau selon l'une quelconque des revendications précédentes, dans lequel le ou les groupes A consistent en un seul cycle aromatique carboné à six chaînons.

6. Matériau selon l'une quelconque des revendications précédentes, dans lequel le ou les groupes A consistent en un seul cycle aromatique carboné porteur d'un seul substituant imine et d'un seul autre substituant différent d'un substituant imine et comprenant au moins un atome porteur d'un doublet libre, ledit substituant imine et l'autre substituant étant en position *ortho* l'un de l'autre sur le cycle aromatique.

7. Matériau selon l'une quelconque des revendications précédentes, dans lequel le ou les groupes A répondent à la formule (I) suivante : 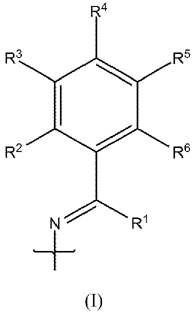 dans laquelle :
- R¹ représente un atome d'hydrogène ou un groupe alkyle, de préférence, un atome d'hydrogène ;
- R² représente un substituant comprenant un atome d'oxygène attracteur d'électrons et à effet mésomère donneur ;
- R³ à R⁶ représentent, indépendamment l'un de l'autre, un atome d'hydrogène, un groupe alkyle, un groupe alcoxy, un groupe ester,
l'accolade indiquant l'endroit par lequel le groupe A est lié au matériau soit directement soit *via* un groupe espaceur organique.

8. Matériau selon la revendication 1, dans lequel le ou les groupes A comprennent, chacun, un ou plusieurs cycles aromatiques, le ou tout ou partie desdits cycles aromatiques comprenant au moins un substituant imine et le ou tout partie desdits cycles comprenant, en leur sein, au moins un atome porteur d'un doublet libre, tel qu'un atome d'oxygène, un atome d'azote et/ou un atome de soufre.

9. Matériau selon la revendication 1 ou 8, dans lequel le ou les groupes A consistent en un cycle choisi parmi les thiazoles, les oxazoles, les imidazoles, les isoxazoles, les pyrazoles.

10. Matériau selon l'une quelconque des revendications précédentes, qui est un matériau appartenant à la famille des chitosanes.

11. Utilisation pour la détection d'au moins un élément alcalin sous forme cationique d'un matériau tel que défini selon l'une quelconque des revendications 1 à 10.

12. Procédé de détection dans un milieu d'au moins un élément alcalin sous forme cationique comprenant les étapes suivantes :
a) après contact du matériau tel que défini selon l'une quelconque des revendications 1 à 10 avec le milieu, une étape de comparaison visuelle ou de comparaison par mesure d'une grandeur optique donnée entre le matériau mis en contact avec le milieu et le matériau tel que défini selon l'une quelconque des revendications 1 à 10 non mis en contact avec des éléments alcalins, dont on veut détecter la présence ;
b) à partir des résultats de l'étape a), une étape de déduction de la présence ou de l'absence des éléments alcalins.

13. Batterie métal alcalin-ion comprenant une cellule électrochimique comprenant une électrode positive, une électrode négative et un électrolyte disposé entre ladite électrode positive et ladite électrode négative, l'électrolyte étant un électrolyte liquide comprenant des ions alcalins, caractérisé en que la cellule comprend, en outre, un matériau tel que défini selon l'une quelconque des revendications 1 à 10.

14. Procédé de fabrication d'un matériau tel que défini selon la revendication 1, ledit procédé comprenant une étape de réaction de condensation, en présence d'au moins un fluide supercritique, entre un précurseur des groupes A comprenant au moins une fonction carbonyle et le matériau destiné à être fonctionnalisé comprenant au moins une fonction amine, moyennant quoi un matériau tel que défini à la revendication 1 est obtenu.

15. Procédé de fabrication d'un matériau tel que défini selon la revendication 1, comprenant les étapes suivantes :
- une étape de réaction de condensation, en présence d'au moins un fluide supercritique, entre un précurseur des groupes A comprenant au moins une fonction carbonyle et un composé comprenant au moins une fonction amine et au moins une fonction apte à réagir, de manière covalente, avec une fonction appartenant au matériau destiné à être fonctionnalisé, ledit composé résultant comprenant un groupe A comprenant au moins une fonction imine liée à un reste du composé comprenant initialement au moins une fonction amine, ledit reste comprenant au moins une fonction apte à réagir, de manière covalente, avec une fonction appartenant au matériau destiné à être fonctionnalisé ;
- une étape de réaction du composé résultant de l'étape de réaction de condensation avec le matériau destiné à être fonctionnalisé, moyennant quoi un matériau tel que défini à la revendication 1 est obtenu.

## Patentansprüche

1. Material, das für die Detektion von mindestens einem alkalischen Element in kationischer Form verwendbar ist, ausgewählt aus Polymeren oder anorganischen Materialien, wobei das Material mit mindestens einer Gruppe, genannt Gruppe A, funktionalisiert ist, die einen oder mehrere aromatische Ringe umfasst, wobei der oder alle oder ein Teil der aromatischen Ringe mindestens einen Iminsubstituenten umfassen und wobei alle oder ein Teil der aromatischen Ringe mindestens ein Atom umfassen, das ein freies Dublett im Inneren des oder aller oder einiger der Ringe trägt, und/oder mindestens einen anderen Substituenten, der sich von einem Iminsubstituenten unterscheidet und mindestens ein Atom umfasst, das ein freies Dublett trägt.

2. Material nach Anspruch 1, wobei die Gruppe(n) A jeweils einen oder mehrere kohlenstoffhaltige aromatische Ringe umfassen, wobei der oder alle oder ein Teil der kohlenstoffhaltigen aromatischen Ringe mindestens einen Iminsubstituenten umfassen und der oder alle Teile der kohlenstoffhaltigen aromatischen Ringe mindestens ein Atom umfassen, das ein freies Dublett trägt, an mindestens einem anderen Substituenten, der sich von einem Iminsubstituenten unterscheidet.

3. Material nach Anspruch 1 oder 2, wobei der andere Substituent ein Substituent ist, der ein Sauerstoffatom, ein Schwefelatom und/oder ein Stickstoffatom umfasst.

4. Material nach einem der vorhergehenden Ansprüche, wobei der andere Substituent ein Substituent mit spendendem mesomerischem Effekt ist.

5. Material nach einem der vorhergehenden Ansprüche, wobei die Gruppe(n) A aus einem einzelnen sechsgliedrigen aromatischen Kohlenstoffring bestehen.

6. Material nach einem der vorhergehenden Ansprüche, wobei die Gruppe(n) A aus einem einzelnen aromatischen Kohlenstoffring bestehen, der einen einzelnen Iminsubstituenten und einen einzelnen anderen Substituenten trägt, der sich von einem Iminsubstituenten unterscheidet und mindestens ein Atom umfasst, das ein freies Dublett trägt, wobei sich der Iminsubstituent und der andere Substituent in ortho-Stellung zueinander auf dem aromatischen Ring befinden.

7. Material nach einem der vorhergehenden Ansprüche, wobei die Gruppe(n) A die folgende Formel (I) aufweisen: 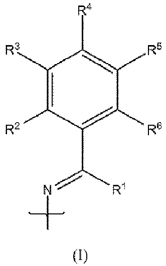 wobei:
- R¹ ein Wasserstoffatom oder eine Alkylgruppe, vorzugsweise ein Wasserstoffatom, darstellt;
- R² einen Substituenten darstellt, der ein elektronenanziehendes Sauerstoffatom mit spendendem mesomerischem Effekt umfasst;
- R³ bis R⁶ unabhängig voneinander ein Wasserstoffatom, eine Alkylgruppe, eine Alkoxygruppe oder eine Estergruppe darstellen,
wobei die geschweifte Klammer die Stelle angibt, an der die Gruppe A entweder direkt oder über eine organische Spacergruppe an das Material gebunden ist.

8. Material nach Anspruch 1, wobei die Gruppe(n) A jeweils einen oder mehrere aromatische Ringe umfassen, wobei der oder alle oder ein Teil der aromatischen Ringe mindestens einen Iminsubstituenten umfassen und der oder alle Teile der Ringe in ihrem Inneren mindestens ein Atom, das ein freies Dublett trägt, umfassen, beispielsweise ein Sauerstoffatom, ein Stickstoffatom und/oder ein Schwefelatom.

9. Material nach Anspruch 1 oder 8, wobei die Gruppe(n) A aus einem Ring bestehen, der aus Thiazolen, Oxazolen, Imidazolen, Isoxazolen und Pyrazolen ausgewählt ist.

10. Material nach einem der vorhergehenden Ansprüche, bei dem es sich um ein Material aus der Familie der Chitosane handelt.

11. Verwendung eines Materials für die Detektion von mindestens einem alkalischen Element in kationischer Form, wie nach einem der Ansprüche 1 bis 10 definiert.

12. Verfahren zur Detektion von mindestens einem alkalischen Element in einem Medium in kationischer Form, das die folgenden Schritte umfasst:
a) nach Kontakt des Materials, wie es nach einem der Ansprüche 1 bis 10 definiert ist, mit dem Medium, einen Schritt des visuellen Vergleichs oder des Vergleichs durch Messung einer gegebenen optischen Größe zwischen dem mit dem Medium in Kontakt gebrachten Material und dem Material, wie es nach einem der Ansprüche 1 bis 10 definiert ist, das nicht mit alkalischen Elementen in Kontakt gebracht wurde, deren Anwesenheit man detektieren will;
b) ausgehend von den Ergebnissen von Schritt a) einen Schritt zur Ableitung der Anwesenheit oder Abwesenheit der alkalischen Elemente.

13. Alkalimetall-lonenbatterie, die eine elektrochemische Zelle umfasst, die eine positive Elektrode, eine negative Elektrode und einen zwischen der positiven Elektrode und der negativen Elektrode angeordneten Elektrolyten umfasst, wobei der Elektrolyt ein flüssiger Elektrolyt ist, der Alkaliionen umfasst, **dadurch gekennzeichnet, dass** die Zelle ferner ein Material umfasst, wie es nach einem der Ansprüche 1 bis 10 definiert ist.

14. Verfahren zur Herstellung eines wie in Anspruch 1 definierten Materials, wobei das Verfahren einen Schritt einer Kondensationsreaktion bei Anwesenheit von mindestens einem überkritischen Fluid zwischen einem Vorläufer der Gruppen A, der mindestens eine Carbonylfunktion umfasst, und dem zu funktionalisierenden Material, das mindestens eine Aminfunktion umfasst, wodurch man ein wie in Anspruch 1 definiertes Material erhält.

15. Verfahren zur Herstellung eines Materials wie nach Anspruch 1 definiert, umfassend die folgenden Schritte:
- einen Schritt einer Kondensationsreaktion in Gegenwart von mindestens einem überkritischen Fluid zwischen einem Vorläufer der Gruppen A, der mindestens eine Carbonylfunktion umfasst, und einer Verbindung, die mindestens eine Aminfunktion und mindestens eine Funktion umfasst, die in der Lage ist, auf kovalente Weise mit einer Funktion zu reagieren, die zu dem Material gehört, das funktionalisiert werden soll, wobei die resultierende Verbindung eine Gruppe A umfasst, die mindestens eine Iminfunktion umfasst, die an einen Rest der Verbindung gebunden ist, die ursprünglich mindestens eine Aminfunktion umfasst, wobei der Rest mindestens eine Funktion umfasst, die in der Lage ist, auf kovalente Weise mit einer Funktion zu reagieren, die zu dem Material gehört, das funktionalisiert werden soll;
- einen Schritt der Reaktion der Verbindung, die aus dem Kondensationsreaktionsschritt resultiert, mit dem zu funktionalisierenden Material, wodurch ein Material erhalten wird wie in Anspruch 1 definiert.

## Claims

1. Material that can be used for the detection of at least one alkaline element in cationic form chosen from polymers or inorganic materials, said material being functionalised by at least one group, referred to as group A, comprising one or more aromatic rings, the or all or a portion of said aromatic rings comprising at least one imine substituent and the or all or a portion of said aromatic rings comprising at least one atom carrying a free doublet within the or all or a portion of said rings and/or at least one other substituent different from an imine substituent and comprising at least one atom carrying a free doublet.

2. Material according to claim 1, wherein the group or groups A each comprise one or more carbon aromatic rings, the or all or a portion of said carbon aromatic rings comprising at least one imine substituent and the or all or a portion of said carbon aromatic rings comprising at least one atom carrying a free doublet at the level of at least one other substituent different from an imine substituent.

3. Material according to claim 1 or 2, wherein the other substituent is a substituent comprising an oxygen atom, a sulphur atom and/or a nitrogen atom.

4. Material according to any of the preceding claims, wherein the other substituent is an electron withdrawing substituent and with a mesomeric donor effect.

5. Material according to any of the preceding claims, wherein the group or groups A consist of a single six-member carbon aromatic ring.

6. Material according to any of the preceding claims, wherein the group or groups A consist of a single carbon aromatic ring carrying a single imine substituent and a single other substituent different from an imine substituent and comprising at least one atom carrying a free doublet, said imine substituent and the other substituent being in *ortho* position with respect to one another on the aromatic ring.

7. Material according to any of the preceding claims, wherein the group or groups A correspond to the following formula (I): 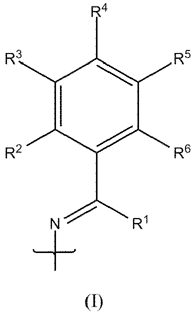 wherein:
- R¹ represents a hydrogen atom or an alkyl group, preferably, a hydrogen atom;
- R² represents a substituent comprising an electron withdrawing oxygen atom and with a mesomeric donor effect;
- R³ to R⁶ represent, independently of one another, a hydrogen atom, an alkyl group, an alkoxy group, an ester group,
the brace indicating the location through which the group A is bonded to the material either directly or *via* an organic spacer group.

8. Material according to claim 1, wherein the group or groups A comprise, each, one or more aromatic rings, the or all or a portion of said aromatic rings comprising at least one imine substituent and the or all or a portion of said rings comprising, within them, at least one atom carrying a free doublet, such as an oxygen atom, such as an nitrogen atom and/or a sulphur atom.

9. Material according to claim 1 ou 8, wherein the group or groups A consist of a ring chosen from thiazoles, oxazoles, imidazoles, isoxazoles, pyrazoles.

10. Material according to any of the preceding claims, which is a material belonging to the chitosan family.

11. Use for the detection of at least one alkaline element in cationic form of a material as defined according to any of claims 1 to 10.

12. Method for detection in a medium of at least one alkaline element in cationic form comprising the following steps:
a) after contact of the material as defined according to any one of claims 1 to 10 with the medium, a step of visually comparing or of comparing by measuring a given optical magnitude between the material put into contact with the medium and the material as defined according to any one of claims 1 to 10 not put into contact with alkaline elements, of which it is sought to detect the presence;
b) from the results of step a), a step of deducing the presence or the absence of alkaline elements.

13. Alkaline-ion metal battery comprising an electrochemical cell comprising a positive electrode, a negative electrode and an electrolyte arranged between said positive electrode and said negative electrode, the electrolyte being a liquid electrolyte comprising alkaline ions, **characterised in that** the cell further comprises a material such as defined according to any one of claims 1 to 10.

14. Method for manufacturing a material such as defined according to claim 1, said method comprising a step of condensation reaction, in the presence of at least one supercritical fluid, between a precursor of the groups A comprising at least one carbonyl function and the material intended to be functionalised comprising at least one amine function, whereby a material such as defined in claim 1 is obtained.

15. Method for manufacturing a material such as defined according to claim 1, comprising the following steps:
- a step of condensation reaction, in the presence of at least one supercritical fluid, between a precursor of the groups A comprising at least one carbonyl function and a compound comprising at least one amine function and at least one function able to react, covalently, with a function belonging to the material intended to be functionalised, said resulting compound comprising a group A comprising at least one imine function bonded to a remainder of the compound initially comprising at least one amine function, said remainder comprising at least one function able to react, covalently, with a function belonging to the material intended to be functionalised;
- a step of reacting of the compound resulting from the step of condensation reaction with the material intended to be functionalised, whereby a material such as defined in claim 1 is obtained.
